Europäisches Patentamt

European Patent Office

Office européen des brevets

(19)

(11) Numéro de publication: **0 102 904**
**A1**

## (12) DEMANDE DE BREVET EUROPEEN

(21) Numéro de dépôt: **83401741.0**

(22) Date de dépôt: **02.09.83**

(51) Int. Cl.³: **B 60 R 13/10**
**G 09 F 7/16**

(30) Priorité: **07.09.82 FR 8215396**

(43) Date de publication de la demande:
**14.03.84 Bulletin 84/11**

(84) Etats contractants désignés:
**BE DE GB**

(71) Demandeur: **Bridoux, Roland**
**3 route de Neuville Thelus**
**F-62580 Vimy(FR)**

(72) Inventeur: **Bridoux, Roland**
**3 route de Neuville Thelus**
**F-62580 Vimy(FR)**

(74) Mandataire: **Lemoine, Jean**
**Cabinet Lemoine 12, boulevard de la Liberté**
**F-59800 Lille(FR)**

(54) **Plaques indicatrices avec face exposée protectrice transparente au revers de laquelle sont fixées les indications.**

(57) La présente invention concerne plus particulièrement mais non exclusivement, les plaques minéralogiques de véhicules automobiles.

Les plaques sont caractérisées par le fait qu'on a collé avec un adhésif transparent (8) sur ledit revers un élément de fond (6) en interposant, avec la composition ou disposition voulue, en les collant, les motifs d'indication (4) qui ont une nuance qui ressort sur celle dudit élément de font (6) et qui sont ainsi pris en sandwich entre la face exposée protectrice transparente plane et lisse (31) et ledit élément de fond (6), ladite composition ou disposition étant facilitée par le fait que lesdits motifs (4) adhérent sur la surface où on les dispose par un moyen adhésif et à l'aide d'un repérage prévu à cet effet.

Application à l'immatriculation, au marquage des rues ou numéros des immeubles, etc ...

Fig.11

EP 0 102 904 A1

### Domaine technique

La présente invention concerne les plaques indicatrices avec face exposée protectrice transparente plane et lisse au revers de laquelle sont fixées des indications qui peuvent être des signes quelconques mais généralement des lettres ou des chiffres. Elle concerne plus particulièrement, mais non exclusivement, les plaques minéralogiques de véhicules automobiles.

### Problème posé

La plupart des plaques indicatrices comporte des inscriptions ou signes imprimés ou peints en un ou plusieurs coloris se détachant sur une teinte de fond de nuance différente, de préférence contrastée avec les coloris des inscriptions ou signes. Ceux-ci sont donc directement soumis aux dégradations naturelles occasionnées soit par les agents atmosphériques, soit par l'exposition dans des conditions particulièrement agressives et corrosives, comme à l'intérieur de certaines usines. Dans les deux cas, l'essuyage ou le lavage actif détermine un effet d'abrasion qui accélère l'altération. Même si les inscriptions ou signes sont gravés en relief ou en creux, l'inconvénient subsiste ; le nettoyage est même alors plus difficile.

Le problème posé est donc de réaliser des plaques indicatrices qui résistent aux agents atmosphériques ou corrosifs et dont l'entretien est facilité.

### Etat de la technique et inconvénients

De bons résultats ont été obtenus jusqu'à présent, pour pallier les inconvénients décrits ici ci-dessus, par l'usage de plaques en matière plastique transparente au dos desquelles sont gravés les textes ou motifs. Les creux ainsi obtenus sont remplis de peinture et, ensuite, la face arrière est entièrement peinte d'une couleur différente. On obtient ainsi un texte ou un dessin dans un ou plusieurs coloris se détachant sur une ou plusieurs teinte s de fond, les inscriptions ou les dessins n'étant pas directement en contact avec l'atmosphère. On peut d'ailleurs recouvrir le revers d'une enduction protectrice supplémentaire.

Ce procédé donne satisfaction mais nécessite l'emploi d'une main d'oeuvre qualifiée et l'utilisation d'un outillage spécifique et coûteux comme une machine à fraiser, des pantographes à graver, des pochoirs, des pistolets à peinture ... etc... Ces appareillages ne peuvent être mis en oeuvre que dans des ateliers spécialisés et par une main d'oeuvre qualifiée. Pour amortir tout cela, il faut avoir une quantité importante de plaques à fabriquer, ce qui limite le développement de ce genre de marquage sans qu'il puisse être mis en oeuvre par de petits ateliers, des garagistes ou des amateurs.

C'est avec ce procédé que l'on a déjà réalisé des plaques pour l'immatriculation automobile. Les résultats ont été bons car on bénéficie des avantages du marquage protégé et de la grande facilité de nettoyage permettant de conserver une bonne visibilité et les caractéristiques d'origine. Mais la complexité des moyens à mettre en oeuvre pour satisfaire des besoins rapides en une multiplicité des points de fabrication a limité cette utilisation.

La présente invention propose de résoudre ces problèmes en permettant un plus grand emploi par l'utilisation de moyens simples et en autorisant l'utilisation d'un choix plus vaste de matières, y compris les matières transparentes qui ne supportent pas la gravure , comme le verre.

## Exposé de l'invention

Les plaques de l'invention sont caractérisées principalement par le fait qu'on a collé avec un adhésif sur le revers de la face exposée protectrice transparente plane et lisse, un élément de fond adhésif en interposant, avec la composition ou disposition voulue, en les collant, les motifs d'indication qui ont une nuance qui ressort sur celle dudit élément de fond et qui sont ainsi pris en sandwich entre la face exposée protectrice transparente plane et lisse et ledit élément de fond, ladite composition ou disposition étant facilitée par le fait que lesdits motifs -adhérent sur la surface de fond où on les dispose par un moyen adhésif et à l'aide d'un repèrage prévu à cet effet sur un support non adhérent.

Dans une première version, c'est le revers de la face exposée protectrice transparente plane et lisse qui est enduit à l'origine d'une couche d'adhésif transparent, généralement protégée par une pellicule non adhérente, et sur lequel, après avoir enlevé ladite pellicule, on commence par composer et coller les motifs d'indication, puis sur l'ensemble duquel on applique, en le collant, l'élément de fond.

En général, les formats de la face exposée transparente plane et lisse et de l'élément de fond sont pratiquement identiques : soit qu'ils coïncident directement soit que l'élément de fond ait un format légèrement inférieur pour laisser apparaître une marge ou bordure. Pour faciliter la composition ou la disposition de la plaque, les motifs

d'indications et plus précisément leurs supports amovibles non adhérents provisoires, sont repérés l'un par rapport à l'autre pour l'assemblage et il existe aussi des repères de chacuns de ces motifs par rapport à l'élément sur lequel on les applique pour la composition, que ce soit l'élément de fond ou la face exposée protectrice transparente plane et lisse.

Suivant une première forme de réalisation, les motifs d'indications, notamment des chiffres et des lettres, sont apposés, au préalable, à l'envers, à la manière d'un transfert, sur un support traité pour ne pas être adhérent et qui comporte des repères pour faciliter la composition en plaçant côte à côté, sur l'élément de fond adhésif plusieurs supports de manière que les motifs soient pris en sandwich entre le support et ledit élément de fond auquel ils restent collés lorsqu'on retire le support, ledit élément de fond avec les motifs composés étant alors prêt à être appliqué et collé sur le revers de la face protectrice transparente.

Suivant une deuxième forme de réalisation, les motifs d'indication sont apposés, au préalable, à l'endroit, à la manière d'un transfert, sur un support traité pour ne pas être adhérent et qui comporte des repères pour faciliter la composition en plaçant côte à côté, sur le revers enduit d'adhésif transparent de la face exposée protectrice transparente, plusieurs supports de manière que les motifs soient pris en sandwich entre le support et ladite face à laquelle ils restent collés lorsqu'on retire le support non adhérent, ladite face exposée protectrice transparente plane, avec les motifs composés, étant alors prêts à être collés sur l'élément de fond non adhésif. Il est commode d'imprimer chacune des lettres ou chiffres sur un support qui présente latéralement des saillies et des créneaux complémentaires judicieusement disposés pour que les saillies d'un support s'adaptent exactement aux créneaux du support adjacent, et inversement, un repère quelconque du support tels que ses bords, des croix ou une ligne prévues s'adaptant au moins à un bord, des croix ou un trait prévu de l'élément sur lequel les lettres ou chiffres doivent être collés de manière à réaliser ainsi un repérage précis de la disposition relative à des lettres ou chiffres et d'organiser une composition correcte comme cela se pratique déjà dans l'imprimerie pour le repérage.

Dans cette première réalisation, les motifs d'indications sont généralement imprimés et ont une faible épaisseur. On peut utiliser alors un élément de fond adhésif et une face exposée protectrice qui ont une épaisseur pratiquement indéformable plastiquement.

Dans un autre mode de réalisation, les motifs d'indications ont une épaisseur non négligeable et soit l'élément de fond adhésif, soit la face exposée protectrice transparente plane et lisse, soit les deux doivent être élastiques et présenter une épaisseur déformable pour épouser les contours desdits motifs lorsqu'on applique avec force l'un contre l'autre l'élément de fond et la face exposée protectrice transparente en serrant entre eux les motifs d'indication en s'arrangeant pour éliminer toute inclusion d'air. Cette élimination est facilitée si la face exposée ou l'élément de fond sont poreux ; naturellement les deux éléments peuvent être poreux mais pour la bonne durabilité de la plaque, il est préférable de rendre poreux seulement l'élément de fond. Cette porosité est obtenue par la structure même de la matière ou en perçant des trous minuscules. On peut aussi prévoir des fendillements.

Pour des motifs essentiellement esthétiques, la face exposée transparente peut présenter une bordure relevée à l'intérieur de laquelle s'encastre et se colle l'élément de fond après qu'auront été préalablement collés les motifs d'indication. Cette disposition présente l'avantage d'une meilleure protection qui peut être encore améliorée par le fait que le revers dudit élément de fond reçoit une couche de scellement qui recouvre le bord ou la bordure relevée de l'élément protecteur transparent et externe.

Pour améliorer la visibilité de nuit, et ceci est pratiquement apprécié pour les plaques minéralogiques de véhicules, la face visible soit de l'élément de fond, soit des signes d'indication, soit les deux sont traités par une teinture ou une peinture réflectorisée.

**Solution au problème, avantages et résultat industriel**

Grâce à la technique de l'invention, on peut réaliser des plaques indicatrices de la même manière que l'on compose des transferts. Il en résulte que l'on peut les fabriquer de façon artisanale en obtenant les mêmes résultats qu'avec les plaques en matière plastique transparente. On a même l'avantage de pouvoir utiliser facilement des plaques de verre, y compris le verre trempé pour la face exposée protectrice transparente. En effet, les motifs d'indication, lettres ou chiffres imprimés par exemple, par sérigraphie sur du papier siliconé, sont d'un prix très bas et tout un assortiment peut en être fourni avec un couple de face protectrice transparente-élément de fond dont l'un ou l'autre est adhésif. Evidemment, les parties adhésives sont, avant emploi, protégées par une pellicule amovible non adhérente telle que du papier siliconé.

L'invention sera mieux comprise à l'aide de la description suivante qui en donne quelques exemples non limitatifs de réalisation pratique et qui sont illustrés par les dessins joints.

**Description**

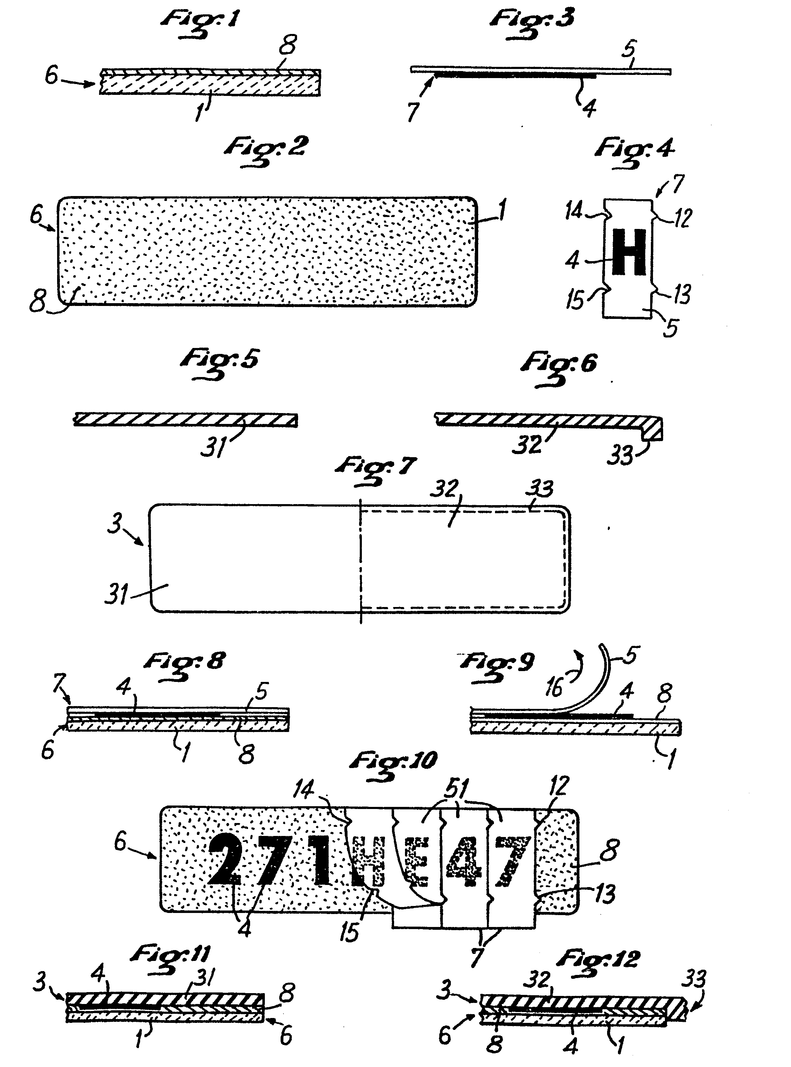

La figure 1 est une coupe, perpendiculaire à son plan, de la feuille de fond (1), qui peut être souple ou rigide, mince ou plus épaisse en étant alors élastique et en ayant une épaisseur suffisante pour être déformable, et qui est colorée et est enduite sur sa face destinée à être appliquée sur la feuille protectrice, d'une couche adhésive transparente (8).

La figure 2 est une vue en plan de la même feuille de fond (1) avec la couche adhésive (8) pour constituer l'élément de fond (6), dans une forme qui convient à une plaque minéralogique. La couche (8), avant usage, est protégée par une pellicule amovible non adhérente, qu'on peut retirer facilement (cette pellicule n'a pas été représentée).

La figure 3 est une coupe, perpendiculaire à son plan, d'un transfert (7) composé d'un motif transférable (4) et d'un support non adhérent (5) constitué, par exemple, par du papier ou une pellicule siliconée, le motif transférable (4) étant déposé généralement par impression, à l'envers, pour être appliqué sur la couche adhésive (8) de la feuille de fond (1) où il apparaîtra à l'endroit.

La figure 4 est une vue en plan de ce même transfert (7) dont le support amovible non adhérent (5) présente des saillies (12) et (13) et des créneaux (14) et (15) pour l'assemblage qui sera expliqué ci-après.

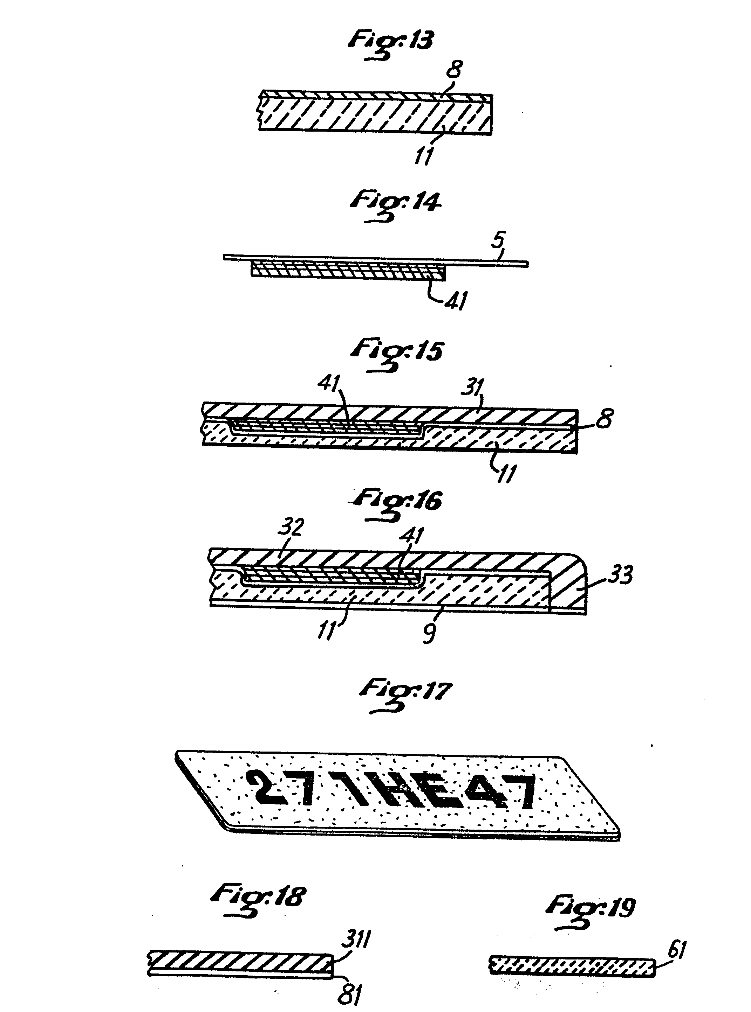

La figure 5 représente une feuille protectrice (31) externe et transparente plane sur ses deux faces et exempte d'adhésif.

La figure 6 représente une plaque protectrice externe transparente (32) exempte d'adhésif présentant une bordure relevée (33).

La figure 7 représente , en plan , dans sa partie gauche, la feuille de la figure 5 et, dans sa partie droite, la plaque de la figure 6.

La figure 8 est une coupe, perpendiculaire à leur plan, d'un élément de fond (6) composé d'une feuille (1) avec une couche adhésive (8) sur laquelle on vient d'appliquer un transfert (7) composé du support amovible (5) et du motif transférable (4).

La figure 9 représente la phase suivante de l'opération de transfert dont on a représenté le commencement à la figure 8, au cours de laquelle on pèle le support amovible non adhérent (5), constitué par du papier siliconé que l'on retire suivant la flèche (16) en laissant le motif (4) adhérer à la feuille (1).

La figure 10 représente, en plan, dans sa partie droite, l'élément de fond (6) avec ses différents transferts (7) mis en place relativement l'un à l'autre par les saillies (12, 13) et les créneaux (14, 15), dans sa partie gauche, l'élément de fond (6) sur lequel se sont collés les motifs transférables (4) après retrait des supports amovibles non adhérents (5) et, dans le centre, les supports (51) dont celui de gauche est en cours de pelage.

La figure 11 représente une coupe, perpendiculaire à son plan, à échelle agrandie de l'élément de fond (6) constitué de la feuille (1) et de la couche adhésive (8), élément auquel ont été transferés les motifs transférables (4) et sur lequel on a appliqué la feuille protectrice plane (31) en accompagnant cette opération d'une pression obtenue par exemple, par passage entre deux rouleaux caoutchoutés, comme ceux d'une essoreuse.

La figure 12 est une vue similaire à celle de la figure 11, mais avec emploi d'une plaque protectrice (32) avec une bordure relevée (33) à l'intérieur de laquelle s'encastre l'élément de fond (6) muni de ses motifs transférables (4), l'élément de fond (6) se collant au revers de la plaque (32) grâce aux surfaces de la couche adhésive (8) qui ne sont pas recouverts par les motifs (4).

La figure 13 est une coupe perpendiculaire à son plan d'une feuille de fond élastique (11) d'épaisseur déformable recouverte de l'habituelle couche adhésive transparente (8) qui est nécessaire pour les signes (41) relativement épais.

La figure 14 est une coupe, perpendiculaire à son plan, d'un signe découpé (41) relativement épais muni d'un support amovible non adhérent (51) et qui est destiné à s'appliquer sur la feuille de fond élastique (11). Toutefois cette configuration n'est pas généralement nécessaire puisque les signes (41) épais peuvent, la plupart du temps, se manipuler indépendamment.

La figure 15 représente une coupe, perpendiculaire à son plan, d'une plaque indicatrice constituée avec une feuille de fond élastique (11) à épaisseur déformable sur laquelle on a appliqué le signe découpé relativement épais (41) et au dessus de laquelle on a appuyé une feuille protectrice (31) transparente externe en appuyant fortement pour incruster le signe (41) dans la feuille (11), qui se déforme, et s'arranger pour chasser toute inclusion d'air. Ceci est facilité si on prévoit une feuille (11) en matériau poreux. Les pores peuvent être constitués artificiellement par perçage de petits trous (non représentés).

La figure 16 est une coupe, perpendiculaire à son plan, d'une plaque indicatrice similaire à celle de la figure (15) mais qui en diffère par une plaque protectrice transparente externe (32) possédant une bordure relevée (33) dans laquelle s'encastre la feuille de fond élastique (11) munie des signes (41), et aussi par l'application au revers d'une couche de scellement (9) qui s'étend soit sur toute la surface du revers de la plaque soit seulement sur l'encadrement à la jonction entre le rebord (33) et la feuille à fond élastique (11).

La figure 17 est une vue en perspective d'une plaque indicatrice terminée, telle que représentée en coupe à la figure 11 ou à la figure 15.

La figure 18 est une coupe, perpendiculaire à son plan, d'une autre version de l'élément protecteur transparent externe (311) au revers duquel est enduite une couche d'adhésif transparent (81).

La figure 19 est une coupe similaire d'un élément de fond (61) ne comportant pas de couche adhésive et destiné à s'associer à un élément protecteur transparent externe, tel que celui qui est représenté à la figure 18 et qui comporte la couche adhésive transparente (81), ceci en association avec un transfert (7), légèrement différent de celui qui a été décrit ci-dessus, et qui va être décrit ci-après mais dont la structure est rigoureusement identique.

La figure 20 est une coupe similaire à celle de la figure 18 d'une plaque protectrice (321), au revers de laquelle est appliquée une couche d'adhésif transparent (81) mais au pourtour de laquelle est prévue une bordure recourbée (331) qui délimite d'ailleurs la couche d'adhésif transparent (81).

La figure 21 est une coupe, perpendiculaire à son plan, de la feuille protectrice (311) munie de la couche adhésive (81) sur laquelle on a appliqué le transfert (71) qui est composé d'un support amovible non adhérent (5) et d'un motif transférable (4). Le transfert (71) a donc une structure·rigoureusement identique à celle du transfert (7) ; cependant il en diffère par le fait que le motif transférable (4) est déposé sur le support (5) à l'endroit puisqu'il est destiné à être appliqué sur la couche adhésive (81) de la feuille (311) de la plaque (321) pour y figurer, précisément, à l'endroit.

La figure 22 représente la phase suivante de l'opération de transfert dont on a représenté le commencement à la figure 21, au cours de laquelle on pèle le support amovible non adhérent (5) que l'on retire suivant la flèche (161) pour laisser subsister uniquement le motif transférable (4) sur la feuille (311).

La figure 23 représente, en plan, dans sa partie gauche l'élément de fond (311) avec ses différents transferts (71) mis en place relativement l'un à l'autre et correctement alignés grâce aux saillies (12, 13) et aux créneaux (14, 15), dans sa partie droite, l'élément de fond (311) sur lequel sont collés des motifs transférables (4) après retrait des supports amovibles non adhérents (5) et, dans le centre, le support (511) en cours de pelage.

La figure 24 est une coupe, perpendiculaire à son plan, de la plaque constituée des éléments décrits aux figures 18, 19, 21, 22 et 23, c'est-à-dire de la plaque (311) après application des motifs transférables (4) et enlèvement des supports amovibles non adhérents (511) puis application et collage de l'élément de fond sans adhésif (61) qui adhère alors à la feuille protectrice (311) par les surfaces qui ne sont pas recouvertes par les motifs transférables (4).

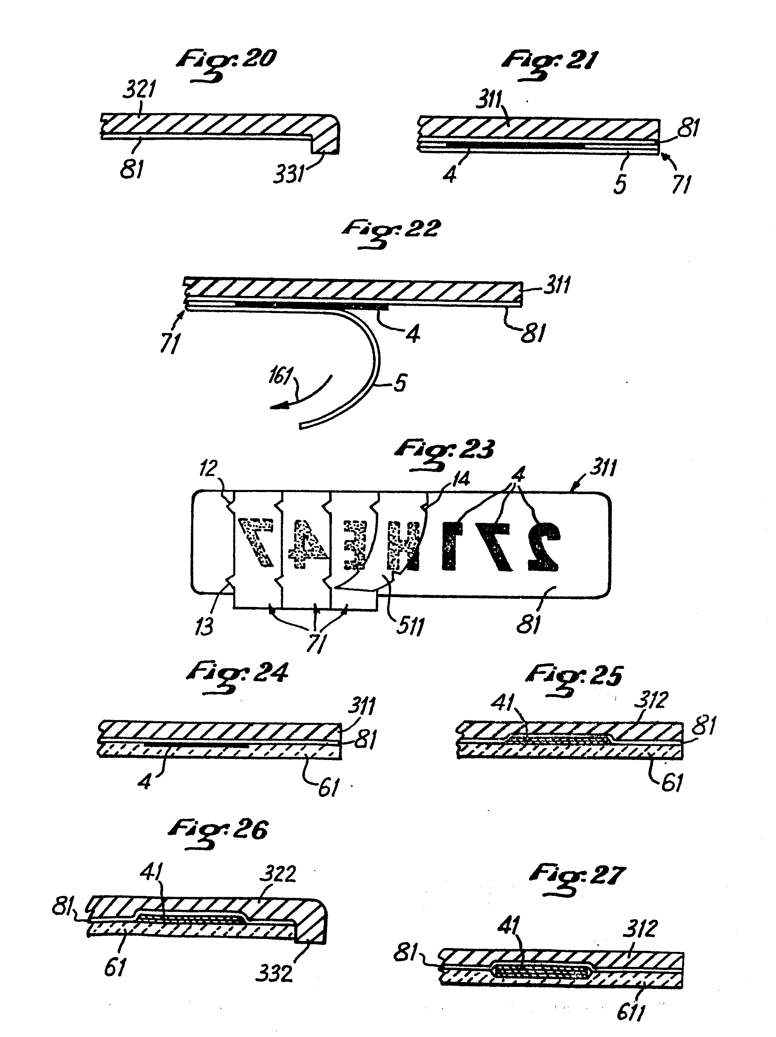

Les figures suivantes, c'est-à-dire les figures 25, 26 et 27, décrivent des plaques qui utilisent des signes découpés relativement épais (41) qui sont pris en sandwich entre les feuilles protectrices (312), (322) et un élément de fond (61, 611). Dans ce cas, il faut prévoir deux modifications par rapport à ce qui vient d'être décrit pour permettre le collage des deux éléments plans l'un sur l'autre, à savoir :

a) que l'un ou l'autre des éléments plans, ou les deux à la fois, soient élastiques et aient une épaisseur déformable pour épouser les contours des motifs (41) ;

b) que l'on prévoit des moyens pour évacuer les inclusions d'air entre les surfaces collées pour incruster convenablement les signes découpés (41).

La figure 25 est une coupe, perpendiculaire à son plan, d'une réalisation avec une feuille protectrice élastique à épaisseur déformable (312) qui comporte aussi une couche d'adhésif transparent (81) et qui s'applique sur un élément de fond sans adhésif (61), dont l'épaisseur est pratiquement indéformable, en prenant en sandwich le signe (41).

La figure 26 est une coupe similaire à celle de la figure 25 pour une constitution de plaques semblables où la seule différence réside dans le fait que l'on utilise une plaque protectrice élastique transparente (322) possédant une bordure rabattue (332) à l'intérieur de laquelle vient s'encastrer l'élément de fond adhésif (61). En effet, la couche d'adhésif (81) est appliquée, à l'origine, sur la plaque protectrice élastique (322).

Toutefois des variantes sont possibles et on peut prévoir que la couche d'adhésif (81), au lieu d'être appliquée sur la feuille protectrice élastique (312) ou la plaque protectrice élastique (322), soit apppliquée sur l'élément de fond (61).

La figure 27 est une coupe perpendiculaire à son plan d'une variante où l'on utilise pour prendre en sandwich le signe découpé relativement épais (41), une feuille protectrice transparente élastique, à épaisseur déformable (312), et un élément de fond sans adhésif élastique qui est aussi à épaisseur déformable (611). On a représenté une couche d'adhésif (81) solidaire, à l'origine, de la feuille (312) ; on pourrait très bien prévoir cette couche d'adhésif (81) solidaire, à l'origine, de l'élément de fond (611).

Le transfert (7), composé d'un support non adhérent, par exemple en papier ou en pellicule siliconée et d'un motif transférable (4) imprimé, est généralement réalisé par impression sérigraphique. On peut toutefois le réaliser par toute sorte de procédé d'impression différent. L'épaisseur du motif (4) est généralement de l'ordre de 0,1 mm.

Par contre les signes découpés épais (41) sont prévus avec une épaisseur beaucoup plus grande de l'ordre du demi millimètre et même plus. L'épaisseur et l'élasticité de la feuille (11) sont fonction de l'épaisseur du signe découpé (41).

On a représenté à la figure 14 un signe (41) muni d'un support amovible non adhérent (5). On peut toutefois utiliser des signes découpés (41) seuls que l'on dispose sur la feuille de fond élastique (11).

La couche adhésive transparente opaque ou colorée (8) doit être constituée pour être compatible avec la matière de l'élément protecteur transparent externe (3). Celui-ci peut être en métacrylate, auquel cas on choisira un adhésif acrylique. Si l'élément (3) est en chlorure de polyvinyle transparent, l'adhésif peut être à base de chlorure de vinyle. Pour des raisons de résistance mécanique, on choisira souvent un élément protecteur transparent externe (33) en polycarbonate.

Les plaques indicatrices de l'invention peuvent être constituées rapidement avec des jeux de caractères et de lettres préparés à l'avance, par un personnel très moyennement qualifié. Elles peuvent servir notamment à la confection de plaques minéralogiques pour immatriculation de véhicules automobiles. On peut s'en servir aussi pour indiquer le nom des rues ou le numéro des maisons etc. Pour améliorer la visibilité de nuit, on peut utiliser des teintures, des encres ou des peintures réflectorisées pour les faces apparentes des éléments de fond (6) et des motifs transférables (4) ou (41).

La fixation des plaques se fait de façon classique par collage ou par des trous dans lesquels on passe des rivets expansibles ou classiques ou encore par des boulons ou des vis.

Pour le stockage avant usage, la couche adhésive transparente (8) de la feuille de fond (1) ou (11) ou la feuille protectrice transparente (311) (312) ou (322) est protégée par une pellicule pelable traitée par une matière peu adhérente comme le silicone. Ceci est d'ailleurs connu dans ce genre de technique.

On a décrit des plaques indicatrices avec face exposée protectrice plane et lisse. Ceci ne signifie pas que ces plaques peuvent être rigoureusement planes. Il s'agit de feuilles, qui à l'origine sont planes mais sont déformables plus ou moins suivant leur épaisseur, leur structure et leur matières. Tous les éléments, que ce soient adhésifs, l'élément de fond (1) ou l'élément protecteur (3) ou le motif (4), peuvent avoir des épaisseurs relativement faibles et se conformer aux surfaces sur lesquelles on les applique dans la mesure où celles-ci sont développables. On peut ainsi réaliser des plaques indicatrices de très faible épaisseur qui s'apparentent aux étiquettes.

**0102904**

## REVENDICATIONS

1. Plaques indicatrices avec face exposée protectrice plane et lisse (3) au revers de laquelle sont fixées les indications c a r a c t é r i s é e s par le fait qu'on a collé, avec un adhésif (8), sur ledit revers de la face exposée un élément de fond (6) adhésif en interposant, avec la composition ou disposition voulue, en les collant, les motifs d'indication (4) qui ont une nuance qui ressort sur celle dudit élément de fond (6) et qui sont ainsi pris en sandwich entre la face exposée protectrice transparente plane et lisse (3) et ledit élément de fond (6), ladite composition ou disposition étant facilitée par le fait que lesdits motifs (4) adhèrent sur la surface du fond (11) où on les dispose par un moyen adhésif et à l'aide d'un repérage prévu à cet effet sur un support non adhérent.

2. Plaques indicatrices, telles que définies dans la revendication 1, c a r a c t é r i s é e s par le fait que ledit revers de la face exposée protectrice transparente plane et lisse (3) est enduit, à l'origine, d'une couche d'adhésif transparent, revers sur lequel on compose les motifs d'indication (4) puis sur l'ensemble duquel on applique l'élément de fond (6).

3. Plaques indicatrices, telles que définies dans la revendication 1, c a r a c t é r i s é e s par le fait que les formats de la face exposée transparente (3) et de l'élément de fond (6) coïncident et que les motifs d'indication (4) et plus précisément leurs supports amovibles non adhérents provisoires (5), sont repérés l'un par rapport à l'autre et par rapport à l'élément sur lequel ils sont collés.

4. Plaques indicatrices, telles que définies dans la

revendication 1, c a r a c t é r i s é e s par le fait que les motifs d'indication (4), notamment des lettres ou des chiffres, sont apposés, au préalable, à l'envers à la manière d'un transfert, sur un support (5) traité pour ne pas être adhérent et qui comporte des repères (12, 13, 14, 15) pour faciliter la composition en plaçant côte à côte, sur l'élément de fond adhésif (6), plusieurs supports (5) de manière que les motifs (4) soient pris en sandwich entre le support (5) et ledit élément de fond (6) auquel ils restent collés lorsqu'on retire le support (5), ledit élément de fond (6), avec les motifs (4) composés, étant alors prêts à être appliqués et collés sur le revers de la face protectrice transparente (3).

5. Plaques indicatrices, telles que définies dans la revendication 2, c a r a c t é r i s é e s par le fait que les motifs d'indication (4) sont apposés, au préalable, à l'endroit, à la manière d'un transfert, sur un support (5) traité pour ne pas être adhérent et qui comporte des repères (12, 13, 14, 15) pour faciliter la composition en plaçant côte à côte, sur le revers enduit d'adhésif de la face exposée protectrice transparente (3), plusieurs supports (5) de manière que les motifs (4) soient pris en sandwich entre le support (5) et ladite face (3) à laquelle ils restent collés lorsqu'on retire le support non adhérent (5), ladite face exposée protectrice transparente plane (3), avec les motifs (4) composés, étant alors prêts à être collés sur l'élément de fond (61) non adhésif.

6. Plaques indicatrices, telles que définies dans l'une ou l'autre des revendications 4 ou 5, c a r a c t é r i s é e s par le fait que les lettres ou chiffres (4) sont imprimés chacun sur un support (5) qui présente latéralement des saillies (12, 13) et des créneaux (14, 15) complémentaires judicieusement disposés pour que les saillies (12, 13) d'un support s'adaptent exactement aux créneaux (14, 15) du support (5) adjacent, et inversement un repère quelconque du support (5) tel que ses bords s'adaptent au moins à un bord de l'élément sur lequel les lettres ou chiffres (4) doivent être collés de manière à réaliser ainsi un repérage précis de la disposition relative des lettres ou chiffres (4) et de manière à organiser une composition correcte.

7. Plaques indicatrices, telles que définies dans la revendication 6, c a r a c t é r i s é e s par le fait que les motifs d'indication (4) sont généralement imprimés et ont une faible épaisseur et que l'élément de fond adhésif (6) tout comme la face exposée protectrice transparente plane et lisse (3) ont une épaisseur pratiquement indéformable élastiquement.

8. Plaques indicatrices, telles que définies dans la revendication 6, c a r a c t é r i s é e s par le fait que les motifs d'indication (41) ont une épaisseur non négligeable et que l'un des éléments au moins, parmi l'élément de fond (11) et la face exposée transparente plane et lisse (31, 32), est élastique et a une épaisseur déformable pour épouser les contours desdits motifs (41) lorsqu'on applique avec force l'un contre l'autre les deux éléments (3, 312, 322) et (6, 61, 611) en s'arrangeant pour éliminer toute inclusion d'air.

9. Plaques indicatrices, telles que définies dans la revendication 8, c a r a c t é r i s é e s par le fait que l'élément de fond est poreux.

10. Plaques indicatrices, telles que définies dans la revendication 1, c a r a c t é r i s é e s par le fait que la face exposée transparente (32) présente une bordure relevée (33, 332) à l'intérieur de laquelle s'encastre et se colle l'élément de fond (6, 61) après qu'auront été préalablement collés les motifs d'indications (4, 41).

11. Plaques indicatrices, telles que définies dans la revendication 1, c a r a c t é r i s é e s par le fait que le revers de l'élément de fond (6) reçoit une couche de scellement (9) qui recouvre le bord ou la bordure relevé (33, 332) de l'élément protecteur transparent externe (3, 32, 322).

12. Plaques indicatrices, telles que définies dans l'une quelconque des revendications précédentes, c a r a c t é r i s é e s par le fait que la face visible d'au moins l'un des deux, parmi l'élément de fond (6, 61, 611) et les signes d'indication (4, 41), est traitée par une peinture réflectorisée.

0102904

1/3

Fig. 1

Fig. 2

Fig. 3

Fig. 4

Fig. 5

Fig. 6

Fig. 7

Fig. 8

Fig. 9

Fig. 10

Fig. 11

Fig. 12

Fig.13

Fig.14

Fig.15

Fig.16

Fig.17

Fig.18

Fig.19

0102904

3/3

Fig. 20

Fig. 21

Fig. 22

Fig. 23

Fig. 24

Fig. 25

Fig. 26

Fig. 27

**Office européen des brevets**

## RAPPORT DE RECHERCHE EUROPEENNE

EP 83 40 1741

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | GB-A-2 026 750 (GRAYS GARAGE LTD.)<br>* Page 1, lignes 30-74; page 2, lignes 23-30 * | 1,2,7,12 | B 60 R 13/10<br>G 09 F 7/16 |
| X | GB-A-2 093 622 (JAMES BEREFORD & SON LTD.)<br>* Page 1, lignes 19-33; page 2, lignes 36-38 * | 1,2,4,5,12 | |
| A | US-A-3 315 387 (W.H. BRADY CO.)<br>* Figures 7,8,10; colonne 3, lignes 30-40,57-75 * | 3-6 | |
| A | DE-A-2 748 708 (HOLSTEIN)<br>* Revendications 1-4 * | 1,2,7,8 | DOMAINES TECHNIQUES RECHERCHES (Int. Cl. ³)<br><br>B 60 R<br>G 09 F |

Le présent rapport de recherche a été établi pour toutes les revendications

| Lieu de la recherche | Date d'achèvement de la recherche | Examinateur |
|---|---|---|
| LA HAYE | 08-12-1983 | ALLEN E.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82